# EUROPÄISCHE PATENTSCHRIFT

(11) **EP 2 660 270 B1**
(45) Veröffentlichungstag und Bekanntmachung des Hinweises auf die Patenterteilung: **25.10.2023**
(21) Anmeldenummer: 12166195.3
(22) Anmeldetag: 30.04.2012
(51) Int. Cl.: C08G 75/02

(54) **Verfahren zur Abtrennung von volatilen Substanzen aus Stoffgemischen sowie Vorrichtung zur Herstellung von Polyarylensulfiden**
Method for separating volatile substances from material mixtures and device for producing polyarylene sulphides
Procédé de séparation de substances volatiles à base de mélanges de matières ainsi que dispositif de fabrication de sulfures de polyarylènes

(43) Veröffentlichungstag der Anmeldung: 06.11.2013
(73) Patentinhaber: HDC POLYALL Co., Ltd., Ulsan 44784 (KR)
(72) Erfinder: Schäfersküpper, Clifford, 07318 Saalfeld/Saale (DE); Hille, Thomas, 13505 Berlin (DE); Jürgens, Theodor, 44581 Castrop (DE); Schumann, Andre, 13597 Berlin (DE); Gierszewski, Lars, 12161 Berlin (DE); Cha, Il Hoon, Gyeonggi-do 463-400 (KR); Kim, Sung Gi, Gyeonggi-do 463-400 (KR); Kim, Yoon Cheol, Gyeonggi-do 463-400 (KR)
(74) Vertreter: WSL Patentanwälte Partnerschaft mbB

(56) Entgegenhaltungen:
- EP-A1- 1 493 772
- EP-A2- 0 488 268
- WO-A1-2010/093734
- US-A- 3 356 763
- US-A- 5 648 437

## Beschreibung

Die vorliegende Erfindung betrifft ein Verfahren zur Abtrennung von flüchtigen Substanzen, insbesondere lod, diiodierten aromatischen Verbindungen und/oder Gemischen hieraus aus Stoffgemischen, die diese Verbindungen enthalten. Zudem betrifft die vorliegende Erfindung eine Vorrichtung zur Herstellung von Polyarylensulfiden, mit Hilfe derer flüchtige Substanzen, insbesondere lod sowie diiodierte aromatische Verbindungen, aus den Polymerisaten abgetrennt werden können.

In Polykondensationsprozessen entsteht während der chemischen Reaktion zumindest ein Reaktionsprodukt, welches aus dem Prozess entfernt werden muss, um den Aufbau von Makromolekülen überhaupt erst zu ermöglichen.

Dieses Reaktionsprodukt ist aber fast immer mit mindestens einer weiteren Substanz aus "Gleichgewichtsgründen" versetzt, welche zumeist dampfförmig ist und als Monomer bzw. Einsatzstoff noch am Aufbau des Makromoleküls teilhaben kann und somit möglichst umgehend in den Prozess zurückgeführt werden soll.

Bekannt sind Verfahren, wie z.B. Polyesterpolykondensationsverfahren, welche mit Hilfe der "klassischen" Verfahren, wie Rektifikationen, Reverse Osmosis, Pervaporationen, etc., die Reaktionsprodukte, wie Wasser oder Methanol und/oder THF, aus dem Prozess ausschleusen.

Der Chemismus bzw. die Prozessparameter zur Herstellung von PPS (Polyphenylensulfid) bzw. PAS (Polyarylensulfid) mittels p-DIB und elementarem Schwefel ist beispielsweise in den folgenden Patenten beschrieben:
- US 4,786,713 (Copolyarylene-Sulfidex-Disulfide),
- US 2009/0203872 (Manufacturing Process for Polyarylenesulfide),
- US 2010/0105845 (Method for production of Polyarylenesulfide resin with excellent luminosity and the Polyarylenesulfide Resin),
- US 4,746,758 (Process for Preparing iodinated aromatic compounds).

In diesen Patenten wird der Chemismus der Herstellung von Polyphenylensulfid bzw. Polyarylensulfid beschrieben.

In der US 4,786,713 wird bereits im Jahre 1988 ein Verfahren nebst Angabe von Prozessparametern ausgehend von elementarem Schwefel und para-Diiodbenzol beschrieben, um das Polymere PAS zu synthetisieren.

Im der US 4,786,713 aus dem Jahre 1988 wird das korrosive Jod aus dem verfestigten Endprodukt mittels heißem Inertgas bzw. Vakuum entfernt, während in den Patenten von SKC das Jod durch Zugabe von Terminator-Additiven gegen Ende des chemischen Prozesses abgefangen wird, um den Jodgehalt im Endprodukt zu minimieren. Hier soll ein Jodgehalt von kleiner 1000 ppm im Endprodukt erzielt werden, um spätere Korrosionen durch das Endprodukt zu minimieren bzw. zu verhindern.

Aus der EP 1 493 772 A1 ist ein Verfahren zum Reinigen eines Polyarylensulfids und eine Vorrichtung zum Reinigen desselben bekannt.

Die US 5,648,437 betrifft ein Schmelzverfahren zur Herstellung von thermoplastischen, lösungsmittelfreien Polycarbonaten, wobei ein kontinuierlich betriebener Rohrreaktor zur Verdampfung von Monophenolen eingesetzt wird. Aus der WO 2010/093734 A1 ist ein Verfahren zur Herstellung von Polyphenylensulfid bekannt, bei dem das Polyphenylensulfid mit einer Base (z. B. Natriumhydroxid) gewaschen wird, um die Menge an Ausgasungen während eines nachfolgenden Schmelzverarbeitungsschrittes des Polyphenylensulfids zu reduzieren.

Die EP 0 488 268 A2 betrifft ein Verfahren zur Erhöhung der Konzentrationen von Reaktanten bei der Polymerisation von Polyphenylensulfid ohne eine Verschlechterung des erzielten Molekulargewichts durch Verdampfen von überschüssigem Wasser als Nebenprodukt während der Polymerisationsreaktion zu verschlechtern.

Die US 3,356,763 betrifft ein Verfahren zur Herstellung von Blockcopolymeren bestimmter konjugierter Diene mit Vinyl-substitutierten aromatischen Kohlenwasserstoffen.

Die im Prozess auftretenden Substanzen, wie das lod und p-DIB (para-Diiodbenzol) sind recht teuer, so dass eine effiziente Trennung obiger Komponenten und eine direkte Rückführung besonders des p-DIB in den Polykondensationsprozess für die Wirtschaftlichkeit sehr wichtig ist und Stoffverluste minimiert werden müssen. Es gilt also, das p-DIB möglichst umfassend direkt in den Prozess zurückzuführen und das teure und umweltgefährliche lod möglichst verlustfrei zwecks Weiterverarbeitung auszuschleusen. Das ausgeschleuste Jod wird hauptsächlich in einem anderen Verfahren, welches als "Transiodination" bezeichnet wird, zu dem für das Polymerverfahren benötigten p-DIB "umgewandelt",

lod-haltige Gasmischungen aus dem Polykondensationsprozess, die bei Drücken entnommen werden, welche unterhalb des Tripelpunktes des lods liegen, lassen sich ausschließlich Desublimieren, Aus diesem Grunde sind die "üblichen" Prozess-Einheiten, wie Rektifikationen, Pervaporationen, etc., dort nicht mehr anwendbar.

Besonders erschwerend kommt noch hinzu, dass lod besonders bei hoher Reinheit extrem korrosiv ist und besonders teure Werkstoffe für entsprechende Reaktoren und andere Ausrüstungen erforderlich macht.

Bei besonders korrosiven Substanzen, wie es bei lod der Fall ist, müssen äußerst teure Werkstoffe, wie z.B. Hastelloy und andere zum Einsatz kommen.

Da Desublimationen von lod und p-DIB-Mischungen bei Vacua in der Größenordnung von 1 mbar absolut stattfinden, sind die Anforderungen und die Vakuum-Dichtigkeit sehr hoch und erfordern besondere Verfahrenskomponenten und Maßnahmen.

Problematisch ist zudem, dass unterhalb bestimmter Drücke und Temperaturen als auch Unterkühlungen der zu desublimierenden Substanzen diese je nach Fahrweise und Art des Apparates in den unterschiedlichsten Formen und Modifikationen abgeschieden wird. Diese Strukturen können eine recht hohe oder auch sehr niedrige Dichte haben, was den Wärmeübergang und somit Wärmetauscher-Flächen gravierend beeinflusst. Hier werden besondere Fahrweisen u.a. der Desublimationstemperaturen zwecks Minimierung der Kontaktflächen in den Desublimatoren wichtig.

Ausgehend hiervon ist es somit Aufgabe der vorliegenden Erfindung, ein Verfahren anzugeben, das eine möglichst effiziente Abtrennung von entstehenden Nebenprodukten, beispielsweise lod, sowie nicht abreagierten Edukten bei der Herstellung von Polyarylensulfiden ermöglicht. Ebenso ist es Aufgabe der vorliegenden Erfindung, eine Vorrichtung bereitzustellen, die eine möglichst effiziente Abtrennung der zuvor beschriebenen Substanzen aus einer Polymer- bzw. Prepolymerschmelze ermöglicht.

Diese Aufgabe wird bezüglich des Verfahrens mit den Merkmalen des Patentanspruchs 1 sowie bezüglich der Vorrichtung mit den Merkmalen des Patentanspruchs 9 gelöst. Die jeweiligen abhängigen Patentansprüche stellen dabei vorteilhafte Weiterbildungen dar.

Erfindungsgemäß wird somit ein Verfahren zum Abtrennen von lod, mindestens einer diiodierten aromatischen Verbindung gemäß der allgemeinen Formel II

I-A-I Formel II

wobei A ein bivalentes aromatisches Radikal darstellt und/oder Gemischen hieraus aus Stoffgemischen, enthaltend lod und/oder die mindestens eine diiodierte aromatische Verbindung gemäß der allgemeinen Formel II angegeben, bei dem
a) ein erster Teil des lods, der mindestens einen diiodierten aromatischen Verbindung gemäß der allgemeinen Formel II und/oder des Gemischs hieraus bei einem Druck abgetrennt wird, der gleich oder größer als der Druck ist, der am Tripelpunkt vom lod vorherrscht, und
b) ein zweiter Teil des lods, der diiodierten aromatischen Verbindung gemäß der allgemeinen Formel II und/oder des Gemischs hieraus bei einem Druck abgetrennt wird, der kleiner als der Druck ist, der am Tripelpunkt vom lod vorherrscht,
wobei in beiden Schritten a) und b) das Stoffgemisch jeweils Temperaturen aufweist, bei denen zumindest lod bei den genannten Drücken gasförmig vorliegt.

Somit ist nicht nur ein Polykondensationsprozess an sich Gegenstand des der Erfindung zugrunde liegenden Verfahrens, sondern speziell die sich an diesen Prozess anschließenden Verfahrensstufen, welche die Reaktionsprodukte und die noch verwertbaren Edukte, welche aus Gleichgewichtsgründen aus dem Hauptprozess, z.B. einer Polykondensation, dampfförmig entweichen, weiter behandeln, ausschleusen und/oder zurückführen.

Es werden somit Substanzen abgetrennt, welche z.B. während eines Polykondensationsprozesses entstehen bzw. nicht abreagieren, bei welchem elementarer Schwefel und z.B. p-DIB (para-Diiodbenzol) zu einem Makromolekül aufgebaut werden. Es entstehen dabei Reaktionsprodukte, wie hauptsächlich lod, welche zusammen mit eventuell vorhandenen Edukten, wie beispielsweise p-DIB die einzelnen Prozessstufen unter den verschiedensten Drücken und Temperaturen gasförmig verlassen und abgetrennt werden.

Im Verlauf der hintereinander geschalteten Prozessstufen und mit fortschreitenden Reaktion, in welchen die Drücke sinken und die Temperaturen ansteigen, fallen diese Substanzen in unterschiedlichen Zusammensetzungen und Mengen an unterschiedlichen Stellen des Polykondensationsverfahrens an.

Diejenigen Prozesseinheit(en), welche diese ausgeschleusten Reaktionsprodukte, welche mit mindestens einem der Einsatzstoffe versetzt sind, verarbeitet, muss die noch "reaktionsfähigen" Substanzen möglichst rein wieder in den Prozess zurückleiten und die nicht mehr zum Makromolekülaufbau benötigten Substanzen weitgehend aus dem Verfahren ausschleusen.

Zudem stellt die Erfindung eine Vorrichtung bereit, die die Makromoleküle aufbaut und gleichzeitig die während des Polykondensationsprozesses anfallenden lod/p-DIB-Gasströme behandelt, welche bei normalen, mittleren und auch sehr niedrigen Drücken, also Vacua von z.B. 1 mbar und kleiner, aus den Polykondensationsstufen ausgeschleust werden.

Erst die spezielle Verfahrensführung bzw. die zugehörige Vorrichtung, welche diese unterschiedlichen Gasströme auf eine neuartige Art und Weise behandelt, ermöglicht es, dass größere und besonders kontinuierliche Anlagen effizient und wirtschaftlich betrieben werden können.

Erfindungsgemäß ist somit vorgesehen, dass bei einem Polykondensationsverfahren, bei dem diiodierte aromatische Verbindungen mit lod zu den entsprechenden Polyarylensulfiden polykondensiert werden, an mindestens zwei verschiedenen Stellen des Prozessors entstehendes lod sowie gegebenenfalls nicht abreagierte diiodierte aromatische Verbindungen, die als Edukt eingesetzt werden, aus den entstehenden Polymerströmen bzw. Prepolymerströmen abgetrennt werden. Für den Fall, dass lod gleichzeitig neben nicht abreagiertem Edukt (diiodierter aromatischer Verbindung) vorliegt, ist es gemäß dem vorliegenden Verfahren ebenso möglich, Gemische aus lod und der diiodierten aromatischen Verbindung aus den entsprechenden Polymerströmen bzw. Prepolymerströmen abzutrennen.

Erfindungswesentlich ist dabei, dass die Abtrennung an zumindest zwei unterschiedlichen Stellen des Prepolymer- bzw. Polymerstromes erfolgt. An einer ersten Stelle liegen dabei Verfahrensbedingungen vor, bei denen zumindest der Druck am oder oberhalb des am Tripelpunktes des Iods liegen, d.h. der Druck beträgt bevorzugt ≥ 126 mbar (abs.); gleichzeitig liegen dabei genügend hohe Temperaturen des Stoffgemisches, aus dem die genannten Substanzen abgetrennt werden sollen, vor, so dass zumindest das lod in gasförmigem Aggregatszustand vorliegt.

Eine weitere Entnahme des iods bzw. der diiodierten aromatischen Verbindung und/oder Gemischen hieraus erfolgt an einer weiteren Stelle, wobei Bedingungen vorliegen, bei denen zumindest der Druck unterhalb des am Tripelpunktes des lods vorherrschenden Druckes liegt, d.h. der Druck beträgt bevorzugt < 126 mbar (abs.), wobei das Stoffgemisch, aus dem die genannten Substanzen abgetrennt werden sollen, jedoch eine genügend hohe Temperatur aufweist, so dass zumindest das lod unter den genannten Druckbedingungen gasförmig vorliegt.

Ebenso ist es jedoch möglich und von der Erfindung mit umfasst, dass die genannten Abtrennungsstufen, d.h. die Abtrennung des ersten Teils bzw. des zweiten Teils der zuvor genannten Bedingungen, mehrfach ausgeführt sind, d.h. dass eine mehrfache Abtrennung, d.h. an mehreren Stellen nacheinander durchgeführte Abtrennung, der oben genannten Substanzen bei den Druckbedingungen, wie sie für den ersten Teil der Abtrennung beschrieben sind, durchgeführt wird; weiterhin ist auch eine mehrfache Abtrennung der oben genannten Substanzen unter den Bedingungen möglich, wie sie für den zweiten Teil der Abtrennung beschrieben sind.

Überraschenderweise hat sich gezeigt, dass mit dem erfindungsgemäßen Verfahren eine äußerst effiziente Abtrennung von lod, einer diiodierten aromatischen Verbindung der Formel II bzw. Gemischen hieraus aus Stoffgemischen möglich ist, so dass die Stoffgemische nahezu vollständig oder gänzlich (d.h. unter Nachweisgrenze) von lod bzw. diiodierten aromatischen Verbindungen befreit werden können. Gleichzeitig hat sich gezeigt, dass gemäß dem erfindungsgemäßen Verfahren eine hohe Rückgewinnungsquote, bezogen auf lod bzw. die diiodierte aromatische Verbindung, erzielt werden kann.

In einer bevorzugten Ausführungsform enthält das Stoffgemisch, aus dem lod, die diiodierte aromatische Verbindung gemäß der allgemeinen Formel II bzw. Gemische hieraus abgetrennt werden, Polyarylensulfide, die mindestens eine Wiederholungseinheit gemäß der allgemeinen Formel I 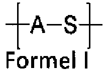 enthalten, wobei A ein bivalentes aromatisches Radikal darstellt. Ebenso ist eine Abtrennung aus Prepolymeren dieser Polyarylensulfide möglich. Bevorzugt sind die Polymere bzw. Prepolymere der Formel I Wasserstoff-terminiert.

Erfindungsgemäß werden unter Polyarylensulfiden Polymere verstanden, die mehr als 10, bevorzugt 10 bis 300, besonders bevorzugt 100 bis 200 Wiederholungseinheiten aufweisen; Prepolymere von Polyarylensulfiden stellen dagegen Substanzen, die eine Wiederholungseinheit gemäß Formel I aufweisen, dar, die bis zu 10, bevorzugt weniger als 5 Wiederholungseinheiten aufweisen, Bevorzugt weist somit ein Prepolymer der Formel I eine Viskosität von 0,1 - 10 Pas (1 - 100 Poise) auf, während die bevorzugte Viskosität der Polymere gemäß Formel I von mindestens 15 - 400 Pas (150 - 4000 Poise), bevorzugt aber 75 - 200 Pas (750 2000 Poise) aufweist. Die Viskosität wird gemäß MFI Melt Flow Index DIN EN ISO 1133 bestimmt.

Die zuvor genannten Prepolymere und Polymere, die die Wiederholungseinheiten gemäß Formel I enthalten, sind dabei in der Regel Wasserstoff-terminiert.

Das erfindungsgemäße Verfahren eignet sich daher insbesondere für die Abtrennung von lod bzw. diiodierten aromatischen Verbindungen der allgemeinen Formel II aus Polykondensationsreaktionen, bei denen Polyarylensulfide durch Polykondensation der diiodierten aromatischen Verbindung der allgemeinen Formel II und Sulfidierungsreagenz, beispielsweise Schwefel, hergestellt werden. Diese besondere Verfahrensführung ermöglicht somit die Herstellung von hochreinen Polyarylensulfiden, gleichzeitig kann dabei eine quasi vollständige Abtrennung des entstehenden Kondensates (lod) sowie gegebenenfalls nicht abreagierten Edukten (diiodierte aromatische Verbindungen gemäß der allgemeinen Formel II) erzielt werden.

Eine besonders bevorzugte Ausführungsform des erfindungsgemäßen Verfahrens sieht vor, dass die Abtrennung aus einer zweistufig ausgeführten Polykondensationsreaktion durchgeführt wird, wobei die Polykondensation derart gestaltet wird, dass
a) in einer ersten Stufe die Verbindung gemäß der allgemeinen Formel II mit einem Sulfidierungsmittel zur Reaktion gebracht und durch Polykondensation ein Prepolymer des Polyarylensulfids der allgemeinen Formel I hergestellt, und
b) in einer zweiten, sich an die erste Stufe anschließenden Stufe eine Polykondensation des Prepolymeren durchgeführt wird.

Gemäß dieser Ausführungsform erfolgt somit eine Abtrennung der Substanzen bei Bedingungen, die in der ersten Stufe oberhalb des Tripelpunktes von lod und in der zweiten Stufe unterhalb des Tripelpunktes von lod liegen.

Weiter bevorzugt ist, wenn
a) der erste abgetrennte Teil der Substanzen (d.h. lod, nicht abreagierten Edukten und/oder Gemischen hiervon) einer Destillations- und/oder Kondensationsstufe zugeführt und das lod verflüssigt und
b) der zweite Teil einer Desublimationsstufe zugeführt und das lod desublimiert
wird.

Durch die Tatsache, dass die Abtrennung des ersten Teils des lods, der diiodierten aromatischen Verbindungen bzw. Gemischen hieraus, z.B. in der ersten Stufe der Polykondensationsreaktion, bei Drücken erfolgt, die oberhalb des Drucks liegen, der am Tripelpunkt von lod vorliegt, ist eine Verflüssigung des lods unter diesen genannten Druckbedingungen durch Abkühlung auf eine Temperatur unterhalb von ca. 114 °C (Tripelpunkttemperatur von lod) möglich. Für den Fall, dass gleichzeitig ebenso die diiodierte aromatische Verbindung mit abgetrennt wird und deren Schmelzpunkt unterhalb der Temperatur liegt, auf die eine Abkühlung in der Destillations- bzw. Kondensationsstufe erfolgt, wird gleichzeitig die diiodierte aromatische Verbindung mit verflüssigt. Für den Fall, dass der Schmelzpunkt der diiodierten aromatischen Verbindung oberhalb der Temperaturen liegt, auf die in der zuvor beschriebenen Destillations- bzw. Kondensationsstufe abgekühlt wird, erfolgt eine Verfestigung der diiodierten aromatischen Verbindung, In der Destillations- und/oder Kondensationsstufe kann somit unter Umständen eine stoffliche Trennung von lod von der aromatischen diiodierten Verbindung erfolgen, für den Fall, dass der Kondensationsstufe Gemische aus den zuvor genannten Verbindungen zugeführt werden.

Gemäß dieser bevorzugten Ausführungsform erfolgt ebenso eine Desublimation des lods, das als zweiter Teil aus dem Stoffgemisch abgetrennt wird. Durch die Tatsache, dass die Drücke hier unterhalb des Drucks am Tripelpunkt von lod liegen (< 126 mbar), kann unter diesen Druckbedingungen keine Verflüssigung des lods mehr erfolgen, so dass bei Abkühlung unter 114 °C eine Desublimation oder Solidifikation des lods erfolgt. Für den Fall, dass ein Stoffgemisch abgetrennt wird, das neben lod noch diiodierte aromatische Verbindungen gemäß der allgemeinen Formel II enthält, erfolgt ebenso eine gleichzeitige Solidifikation dieser Verbindung, falls deren Festpunkt bzw. Schmelzpunkt unterhalb der Temperatur liegt, auf die in der Desublimationsstufe abgekühlt wird. Für den Fall, dass deren Festpunkt bzw. Schmelzpunkt oberhalb der in der Desublimationsstufe erzielten Temperatur liegt, erfolgt beispielsweise eine Verflüssigung der diiodierten aromatischen Verbindung der allgemeinen Formel II, so dass gegebenenfalls gleichzeitig eine stoffliche Auftrennung von lod und diiodierter aromatischer Verbindung der Formel II erfolgen kann, für den Fall, dass der Desublimationsstufe ein Gemisch aus lod und Verbindungen der allgemeinen Formel II zugeführt wird.

Gemäß einer weiteren bevorzugten Ausführungsform erfolgt die Abtrennung des ersten Teils, z.B. in der Polykondensation, bei
a) Temperaturen des Stoffgemischs von 250 bis 320 °C, bevorzugt von 260 bis 320 °C, und/oder
b) bei Drücken von ≥ 126 bis 1200 mbar (abs.), bevorzugt von ≥ 126 bis 500 mbar (abs.), insbesondere von 130 bis 335 mbar (abs.).

Ebenso ist vorteilhaft, wenn die Abtrennung des zweiten Teils (z.B. in der zweiten Stufe der Polykondensation) bei
a) Temperaturen des Stoffgemischs von 285 bis 320 °C, bevorzugt von290 bis 300 °C, und/oder
b) bei Drücken von 0,01 bis < 126 mbar (abs.), bevorzugt von 0,1 bis 50 mbar (abs.), insbesondere von 0,2 bis 10 mbar (abs.),
erfolgt.

Bevorzugte bivalente aromatische Radikale A der Verbindung der allgemeinen Formel II bzw. des Polyarylensulfids der Formel I sind dabei ausgewählt aus der Gruppe bestehend aus ortho-, meta- oder para-Phenyl-; Biphenyl-, insbesondere p,p'-Biphenyl-; Diphenylether-, insbesondere p,-p'Diphenylether-; Naphthyl- und/oder Benzophenon-Radikalen,

Bevorzugte Sulfidierungsmittel, mit denen die Verbindung der allgemeinen Formel II im Rahmen einer Polykondensationsreaktion zu den Polyarylensulfiden gemäß der Formel I umgesetzt werden kann, sind dabei ausgewählt aus der Gruppe bestehend aus Schwefel und/oder Alkalisulfiden, wobei Schwefel insbesondere bevorzugt ist.

Gegenstand der vorliegenden Erfindung ist ebenso eine Vorrichtung zur Herstellung von Polyarylensulfiden, enthaltend mindestens eine Wiederholungseinheit gemäß der allgemeinen Formel I 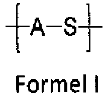 wobei A ein bivalentes aromatisches Radikal darstellt, durch Polykondensation einer diiodierten aromatischen Verbindung gemäß der allgemeinen Formel II

I-A-I Formel II

mit einem Sulfidierungsmittel, umfassend
a) eine Vorkondensationsstufe, umfassend einen Rührkessel oder eine Rührkesselkaskade aus mehreren nacheinander geschalteten Rührkesseln, wobei der Rührkessel bzw. der erste Rührkessel der Rührkesselkaskade mindestens eine Zugabemöglichkeit für die Edukte sowie einen Auslass für das Prepolymere aufweist, sowie dem Rührkessel oder der Rührkesselkaskade nachgeschaltet,
b) eine Polykondensationsstufe, umfassend mindestens einen Polykondensationsreaktor oder eine Kaskade aus mehreren nacheinander geschalteten Polykondensationsreaktoren, wobei der Polykondensationsreaktor bzw. der erste Polykondensationsreaktor der Kaskade aus mehreren Polykondensationsreaktoren eine Eintragsmöglichkeit für die aus der ersten Stufe erhaltenen Prepolymeren sowie eine Austragsmöglichkeit für das Polykondensat aufweist,
wobei die Vorkondensationsstufe mit der Polykondensationsstufe über eine Produktleitung verbunden ist, der Rührkessel oder mindestens ein Rührkessel der Rührkesselkaskade mindestens eine Abzugsmöglichkeit für gasförmige Nebenprodukte und/oder nicht abreagierte Edukte, insbesondere lod und/oder die Verbindung der allgemeinen Formel II aufweist, und der Polykondensationsreaktor oder mindestens ein Polykondensationsreaktor der Kaskade aus mehreren nacheinander geschalteten Polykondensationsreaktoren mindestens eine Abzugsmöglichkeit für gasförmige Nebenprodukte und/oder nicht abreagierte Edukte, insbesondere lod und/oder die Verbindung der allgemeinen Formel II aufweist.

Erfindungsgemäß wird unter dem Begriff "Abzugsmöglichkeit" eine Möglichkeit zur Abführung von gasförmigen Produkten (Brüden) aus den jeweiligen Rührkesseln bzw. Polykondensationsreaktoren verstanden,

Mit der zuvor genannten Vorrichtung kann ein Polykondensationsverfahren zur Herstellung von Polymeren, enthaltend mindestens eine Wiederholungseinheit gemäß der Formel I, durchgeführt werden, bei dem in der ersten Stufe ein Prepolymer erzeugt wird, das in der zweiten Stufe polykondensiert wird.

Die erfindungsgemäße Vorrichtung sowie das zugehörige Polykondensationsverfahren zeichnet sich dadurch aus, dass die Polykondensationsreaktion zur Herstellung von Polyarylensulfiden mehrstufig durchgeführt wird, wobei zunächst ein Vorkondensat oder ein Prepolymer der Polyarylensulfide erzeugt wird und nachfolgend die eigentliche Polykondensation zum fertigen Produkt erfolgt. Die verwendeten Begriffe Prepolymer bzw. Polyarylensulfid sind dabei deckungsgleich mit der zuvor angegebenen Definition.

Die erste Stufe ist dabei aus einem Rührkessel oder einer Kaskade mehrerer nacheinander geschalteter Rührkessel gebildet, wobei die Edukte in den ersten Rührkessel aufgegeben werden und ein Prepolymer des Polyarylensulfids durch Kondensationsreaktion der eingesetzten Ausgangsstoffe gebildet wird.

Für den Fall, dass mehrere Rührkessel verwendet werden (Rührkesselkaskade), erfolgt dabei eine Überführung des Prepolymeren in den jeweils nachfolgenden Rührkessel, wobei sukzessive eine Erhöhung des Polymerisationsgrades bzw. der Viskosität des Prepolymeren stattfindet.

Besonders bevorzugte Rührkesselkaskaden sind beispielsweise in den Patentanmeldungen DE 103 51 085 A1 oder DE 101 55 419 A1 beschrieben, deren gesamter Offenbarungsgehalt bezüglich der Rührkesselkaskade mit zum Gegenstand dieser Anmeldung gemacht wird.

Zudem umfasst die erfindungsgemäße Vorrichtung als Polykondensationsstufe in einer weiteren bevorzugten Ausführungsform einen Polykondensationsreaktor bzw. eine Kaskade aus mehreren nacheinander geschalteten Polykondensationsreaktoren. Ein entsprechender Polykondensationsreaktor ist beispielsweise in der Patentanmeldung WO 2007/140926 A1 beschrieben; auch der gesamte Offenbarungsgehalt dieser Anmeldungen wird hinsichtlich des Polykondensationsreaktors zum Gegenstand der vorliegenden Anmeldung gemacht.

Eine bevorzugte Ausführungsform der erfindungsgemäßen Vorrichtung sieht vor, dass die mindestens eine Abzugsmöglichkeit aus dem Rührkessel bzw. der Rührkesselkaskade in eine Destillationskolonne zur destillativen Auftrennung der gasförmigen Nebenprodukte und/oder nicht abreagierten Edukte mündet, d.h. dem Rührkessel bzw. der Rührkesselkaskade ist mindestens eine Kondensationsvorrichtung und/oder eine Destillationskolonne nachgeschaltet. In dieser Destillationskolonne ist eine Reinigung und/oder Auftrennung der aus dem Rührkessel bzw. der Rührkesselkaskade abgeführten Brüden möglich. Insofern kann beispielsweise bei der Polykondensation entstehendes lod durch Destillation aufgereinigt und im Anschluss weiter verwertet, beispielsweise desublimiert oder kristallisiert, werden. Für den Fall, dass neben lod auch Verbindungen der Formel II vorhanden sind, kann mit der Destillationskolonne eine Abtrennung von lod von den Verbindungen gemäß Formel II erfolgen.

Weiter vorteilhaft ist, dass die Destillationskolonne über eine Rückführung von nicht abreagierten Edukten in den Rührkessel bzw. den ersten Rührkessel der Rührkesselkaskade verfügt. Gemäß dieser bevorzugten Ausführungsform ist es möglich, die abgetrennte diiodierte aromatische Verbindung gemäß Formel II, d.h. das Edukt, in den Rührkessel, d.h. die erste Stufe der Polykondensation, rückzuführen. Dies ermöglicht eine äußerst effiziente und ökonomische Verfahrensführung.

In einer weiteren vorteilhaften Ausführungsform weist die Destillationskolonne kopfseitig einen Abzug auf, der über eine Zuführung mit mindestens einem Kondensator oder Desublimator verbunden ist. Mittels dieses Kondensators kann beispielsweise eine Kondensation bzw. Desublimation des in der Destillationskolonne gasförmig vorliegenden lod-Dampfes erfolgen.

Weiter vorteilhaft ist, dass die von dem Polykondensationsreaktor bzw. der Kaskade aus mehreren nacheinander geschalteten Polykondensationsreaktoren ausgehende mindestens eine Abzugsmöglichkeit in mindestens einen Desublimator mündet. Dabei ist die Möglichkeit umfasst, dass mehrere Abzugsmöglichkeiten vorhanden sind, die in einen einzigen Desublimator münden, ebenso kann auch die Möglichkeit gegeben sein, dass jede Abzugsmöglichkeit in einen separaten Desublimator mündet. Da in Polykondensationsreaktoren vornehmlich Bedingungen vorliegen, die unterhalb des Druckes des Tripelpunktes von lod (d.h. < 126 mbar) liegen, kann aus dieser Stufe der Polykondensationsvorrichtung keine Kondensation des hier gasförmig vorliegenden lod-Dampfes erfolgen, sondern lediglich eine Desublimation bzw. Solidifikation. Hierfür wird gemäß einer bevorzugten Ausführungsform der vorliegenden Erfindung ein Desublimator eingesetzt. Der Desublimator weist dabei gekühlte Flächen auf, an denen sich die lod-Dämpfe verfestigen können. Gegebenenfalls mit abgetrennte Verbindungen gemäß Formel II werden dabei, je nach ihrem Festpunkt und den im Desublimator vorliegenden Verbindungen, ebenso verfestigt bzw. verflüssigt.

Weiter bevorzugt ist es, wenn dem mindestens einen Desublimator mindestens eine Destillationskolonne nachgeschaltet ist, die über eine Leitung mit dem mindestens einen Desublimator verbunden ist, die einen kopfseitigen Abzug und einen sumpfseitigen Abzug umfasst. Mit einer derartigen Destillationskolonne ist weiter eine Aufreinigung der Verbindung gemäß der allgemeinen Formel II möglich.

Zudem kann der kopfseitige Abzug der zuvor genannten Destillationskolonne
a) in den Kondensator bzw. Desublimator münden, der der Destillationskolonne, die an den Rührkessel bzw. die Rührkesselkaskade angeschlossen ist, nachgeschaltet ist, ebenso ist es jedoch auch möglich, dass
b) der kopfseitige Abzug der dem Desublimator nachgeschalteten Destillationskolonne mit dem aus dem Kondensator, der der Destillationskolonne, die an den Rührkessel bzw. die Rührkesselkaskade angeschlossen ist, nachgeschaltet ist, stammenden Produktstrom vereinigt wird.

Weiter bevorzugt ist, wenn die erfindungsgemäße Vorrichtung eine Vorrichtung zur Erzeugung von Unterdruck umfasst, die beispielsweise an den dem Polykondensationsreaktor nachgeschalteten Desublimator oder den Kondensator oder Desublimator, der der Destillationskolonne, die an den Rührkessel oder die Rührkesselkaskade angeschlossen ist, nachgeschaltet ist. Dadurch wird gewährleistet, dass sämtliche aus den Reaktoren, d.h. den Rührkesseln bzw. Rührkesselkaskaden oder Polymerisationsreaktoren, stammenden flüchtigen Substanzen jeweils der Destillationskolonne bzw. den Desublimationseinheiten zugeführt werden und somit eine quasi vollständige Abscheidung der flüchtigen Nebenprodukte bzw. Edukte aus den Reaktionsbrüden erzielt werden kann.

Die vorliegende Erfindung wird anhand der nachfolgenden Ausführungen sowie Figuren näher erläutert, ohne die Erfindung jedoch auf die dort dargestellten speziellen Parameter zu beschränken.

Dabei zeigt
- Figur 1: eine erste Variante der erfindungsgemäßen Verfahrensführung sowie eine dazugehörige Vorrichtung zur Ausführung des Verfahrens, sowie
- Figur 2: eine zweite Variante des erfindungsgemäßen Verfahrens sowie eine Vorrichtung zur Ausführung dieses Verfahrens.

Im Folgenden wird ein Aufbereitungsverfahren beschrieben, welches auf höchst wirtschaftliche und effiziente Art und Weise gasförmigen Substanzen (lod und diiodierte aromatische Verbindungen gemäß Formel II) entweder als Feststoff und/oder Flüssigkeit (aufgeschmolzener Feststoff) aus speziellen Verfahrensstufen schleust, diese sinnvoll zusammenführt, einige Ströme wieder in den Prozess zurückführt; bevorzugt lod beinhaltende Ströme aus der Anlage ausschleust.

Besonders bei kontinuierlichen Prozessen müssen bei Vacua von 0,1 bis 300 mbar und auch darüber die lod- und p-DIB-Ströme ohne Unterbrechung des Vakuums aus dem Prozess entfernt werden, da das Endprodukt bezüglich dessen Qualität konstant sein muss.

Aus Kosten- und energetischen Gründen müssen die Desublimations- bzw. Recovery-Verfahrenskomponenten und die Anlage bezüglich Investitions- und Betriebskosten besonders gut optimiert sein.

Das "Aufbereitungsverfahren" ist hauptsächlich dadurch gekennzeichnet, dass • generell die aus den verschiedenen Stellen des Hauptprozesses austretenden gasförmigen lod/p-DIB-Ströme gereinigt bzw. separiert werden und bevorzugt iodhaltige Ströme aus dem Prozess ausgeschleust und p-DIB-haltige Ströme zwecks Weiterreaktion in den Prozess zurückgeführt werden;
- alle lod-/p-DIB-Gasströme, welche oberhalb des Tripelpunktes von lod liegen, zuerst einmal kondensiert und/oder rektifiziert werden;
- all diejenigen lod-/p-DIB-Gasströme, welche unterhalb des Tripelpunktes von lod aus dem Verfahren ausgeschleust werden, mittels spezieller Desublimatoren zuerst verfestigt und danach in einem weiteren Schritt oberhalb des Tripelpunktes verflüssigt werden;
- es dadurch ermöglicht wird, die unterschiedlichen lod/p-DIB-Ströme sinnvoll zusammenzuführen und per spezieller Trennoperationen, wie z.B. Rektifikationen, unter Überdruck bis herunter zum Vakuum zu trennen und an die entsprechenden Stellen des Verfahrens hinzuführen oder auszuschleusen.

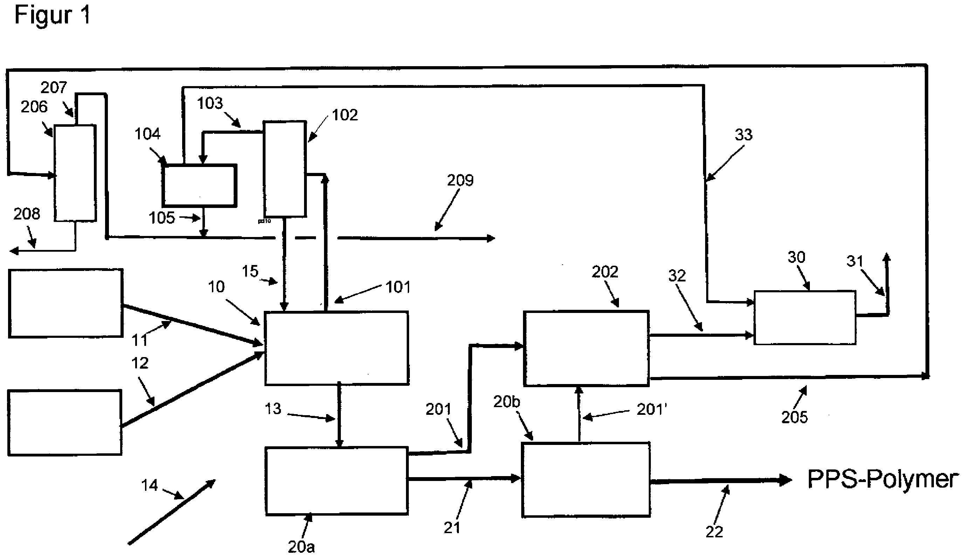

Figur 1 zeigt ein Flussdiagramm einer erfindungsgemäßen Verfahrensführung, bei dem auch eine Vorrichtung gemäß der vorliegenden Erfindung zum Einsatz kommt. Die Edukte Schwefel und beispielsweise para-Diiodbenzol werden aus entsprechenden Vorratsgefäßen über Zuleitungen 11 bzw. 12 einem Rührkessel 10 als erste Stufe der Polykondensationsreaktion zugeführt. Diese erste Stufe wird unter relativ hohen Drücken, d.h. Drücken > 126 mbar, durchgeführt. Im Rührkessel 10 bzw. in einer entsprechenden Rührkesselkaskade werden die Edukte Schwefel und p-DIB zu einem Prepolymeren mit relativ geringer Viskosität umgesetzt. Bei der Polykondensationsreaktion entsteht als Nebenprodukt elementares lod. Additive, wie z.B. Katalysatoren, können an geeigneter Stelle über Zuleitungen 14 eingetragen werden, z.B. in die Zuleitungen 11 oder 12, den Rührkessel 10 oder die Polykondensationsreaktoren 20a und/oder 20b. Der Rührkessel 10 verfügt über einen Abzug 101, über den entstehendes Iod sowie beispielsweise nicht abreagiertes p-DIB einer Destillationskolonne 102 zugeführt werden kann. In der Destillationskolonne 102 erfolgt eine Separierung des Iods und des p-DIB, das beispielsweise als sumpfseitig abgezogenes Produkt über eine Zuleitung 15 in den Rührkessel 10 rückgeführt und somit recycelt werden kann. Das lod kann kopfseitig über einen Abzug 103 abgezogen und einem Kondensator 104 zugeführt werden, wo eine entsprechende Kondensation des Iods zu geschmolzenem Iod erfolgen kann.

Der Rührkessel 10 wird dabei bei Temperaturen betrieben, bei denen lod bei den entsprechenden Drücken ≥ 126 mbar gasförmig vorliegt und somit entsprechend leicht aus den entstehenden Prepolymeren entfernt werden kann. Das Prepolymere wird über eine Verbindungsleitung 13 einem Polykondensationsreaktor zugeführt, der im Fall des in Figur 1 dargestellten Beispiels zweistufig ausgebildet ist und über einen ersten Polykondensationsreaktor 20a und einen zweiten Polykondensationsreaktor 20b verfügt. Die beiden Polykondensationsreaktoren sind über eine Schmelzeleitung 21 miteinander verbunden. Alternativ können die beiden Reaktoren 20a und 20b auch als Einheit ausgebildet sein, in der die entsprechenden Stufen intern voneinander getrennt sind. In den sukzessiven Polykondensationsreaktoren 20a und 20b erfolgt ein Aufbau des Polymerisationsgrades des entsprechenden Polyarylensulfids, beispielsweise des Polyphenylensulfids (PPS). Erneut entsteht dabei lod als gasförmiges Nebenprodukt bzw. in den entstehenden Polymerschmelzen kann noch nicht abreagiertes p-DIB enthalten sein. Beide Polykondensationsreaktoren 20a und 20b verfügen über Abzüge 201 bzw. 201', über die gasförmige Produkte aus den jeweiligen Polykondensationsreaktoren 20a bzw. 20b einem Desublimator 202 zugeführt werden können. Ebenso ist die Möglichkeit gegeben, dass mehrere Desublimatoren nacheinander geschaltet sind, um die Abscheidungsleistung zu erhöhen. Da in den Polykondensationsreaktoren 20a und 20b Drücke vorherrschen, die unterhalb des am Tripelpunkt von lod vorliegenden Druckes herrschen (< 126 mbar), ist unter diesen Bedingungen keine Verfestigung des im gasförmigen Aggregatszustand aus den Reaktoren 20a und 20b abgetrennten lods mehr möglich; lediglich eine Solidifikation bzw. Desublimation des Iods kann noch erfolgen. Im Desublimator 202 erfolgt somit eine Abscheidung von lod als Festsubstanz an beispielsweise gekühlten Teilen des Desublimators, mit denen die aus den Reaktoren 20a und 20b abgezogenen lodströme in Kontakt kommen. Die Drücke in den Polykondensationsreaktoren 20a und 20b werden dabei so eingestellt, dass im Reaktor 20b niedrigere Druckverhältnisse vorherrschen als im Reaktor 20a. Die fertige Polymerschmelze kann über eine Austragsmöglichkeit 22 aus dem Reaktor 20b erfolgen. Im Desublimator 202 abgeschiedenes lod kann über eine Austragsmöglichkeit und eine Zuleitung 205 einer weiteren Kolonne 206 zugeführt werden, wo eine destillative Aufreinigung des lods unter den geeigneten Druckbedingungen, unter denen lod einen Phasenübergang von flüssig nach gasförmig durchläuft, erfolgen kann. Dabei wird lod als gasförmiges kopfseitiges Produkt 207 abgezogen und kann zur externen Wiederaufbereitung der Kolonne entnommen werden. Dabei ist ebenso eine Vereinigung dieses Stromes 207 mit aus der Destillationskolonne 102 entnommenen 103 und im Kondensator 104 kondensierten lodströmen möglich, wobei eine Leitung 105 aus dem Kondensator mit der kopfseitigen Entnahmemöglichkeit 207 der Kolonne 206 vereinigt wird. Anstelle des Kondensators 104 kann auch ein Desublimator vorgesehen sein. Die vereinigten lodströme 209 können somit einer externen Wiederaufbereitung zugeführt werden. Ebenso ist es möglich, dass der kopfseitig der Kolonne 206 entnommene lodstrom 207 dem Kondensator 104 zugeführt wird, um dort zunächst eine Verflüssigung des lods zu erzielen. Die Kolonne 206 weist sumpfseitig einen weiteren Auslass 208 für Nebenprodukte oder Edukte, wie beispielsweise p-DIB, auf. Die Entnahme des im Desublimator 202 abgeschiedenen lods kann beispielsweise dadurch erfolgen, dass die Temperatur im Desublimator zeitweise erhöht wird, so dass erneut ein Phasenübergang von fest nach gasförmig des dort abgeschiedenen lods erfolgt und somit über die Zuleitung 205 ein gasförmiger lodstrom in die Kolonne 206 aufgegeben werden kann. Alternativ oder zusätzlich ist es auch möglich, die Drücke zu erhöhen, so dass das im Desublimator 202 abgeschiedene lod einen Phasenübergang von fest nach flüssig durchlaufen kann, so dass ein flüssiger lodstrom in der Zuleitung 205 der Kolonne 206 zugeführt werden kann. Zudem verfügt die erfindungsgemäße Vorrichtung gemäß dem Beispiel in Figur 1 über eine Vorrichtung zur Erzeugung eines Vakuums 30, die über entsprechende Vakuumleitungen 32 und 33 mit dem Desublimator 202 bzw. dem Kondensator 104 verbunden ist. Die Vorrichtung zur Erzeugung des Vakuums 30 verfügt zudem über einen Auslass für Abgase 31,

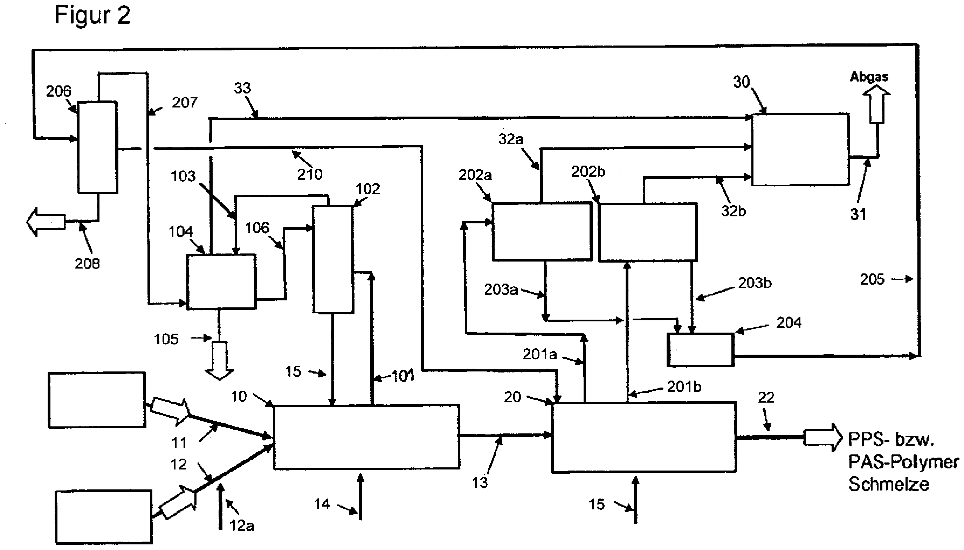

Figur 2 zeigt eine weitere Ausführungsform der erfindungsgemäßen Vorrichtung, bei der gleiche Bestandteile wie in Figur 1 dargestellt mit den gleichen Bezugszeichen versehen sind. Auch die Vorrichtung gemäß Figur 2 weist einen Rührkessel 10 mit Zuleitungen 11 für Schwefel und Zuleitungen 12 für p-DIB auf, wobei in beispielsweise die Zuführung 12 bzw. den Rührkessel 10 über Zuleitungen 12a bzw. 14 noch weitere Additive und/oder Katalysatoren zugeführt werden können. Im Rührkessel 10 erfolgt eine Polykondensation der Edukte zu einem Prepolymeren. Analog zu Figur 1 dargestellt, weist auch der Rührkessel 10 gemäß Figur 2 einen Abzug 101 auf und ist mit einer Destillationskolonne 102 verbunden. Das Prepolymer wird über eine Zuleitung 13 einem mehrstufig ausgeführten Polykondensationsreaktor 20 zugeführt, der an verschiedenen Stellen Abzüge 201a und 201b für gasförmige Nebenprodukte, wie beispielsweise lod und/oder Edukte, wie beispielsweise p-DIB, aufweist. Diese Abzüge 201a und 201b führen jeweils zu einem Desublimator 202a bzw. 202b. Diese Desublimatoren 202a und 202b sind über jeweils separate Vakuumleitungen 32a bzw. 32b an einer Vorrichtung 30 zur Erzeugung von Vakuum angeschossen. Die lodströme aus den Desublimatoren 202a bzw. 202b werden jeweils über eine Zuleitung 203a bzw. 203b einem Sammler 204 zugeführt und von dort aus über eine Zuleitung 205 einer nachgeschalteten Destillationskolonne 206 zugeführt. Der kopfseitig entnommene lodstrom 207 wird in einem Kondensator 104 bzw. Desublimator zusammen mit aus der Destillationskolonne, die der ersten Stufe 10 nachgeschaltet ist, kondensiert bzw. verfestigt und kann beispielsweise als gesammelter lodstrom 105 bzw. als festes lod entnommen werden. Zur weiteren Aufreinigung ist ebenso eine Rückführung 106 in die Kolonne 102 möglich. Zudem kann die Kolonne 206 einen weiteren Abzug 210 aufweisen, über den beispielsweise dort aufgereinigtes p-DIB dem Polykondensationsreaktor 20 erneut zugeführt werden kann. Ebenso ist jedoch auch eine Aufgabe in den Polykondensationsreaktor 10 möglich,

## Patentansprüche

1. Verfahren zum Abtrennen von lod, mindestens einer diiodierten aromatischen Verbindung gemäß der allgemeinen Formel II
I-A-I Formel II
wobei A ein bivalentes aromatisches Radikal darstellt und/oder Gemischen hieraus aus Stoffgemischen, enthaltend lod und/oder die mindestens eine diiodierte aromatische Verbindung gemäß der allgemeinen Formel II
**dadurch gekennzeichnet, dass**
a) ein erster Teil des Iods, der mindestens einen diiodierten aromatischen Verbindung gemäß der allgemeinen Formel II und/oder des Gemischs hieraus bei einem Druck abgetrennt wird, der gleich oder größer als der Druck ist, der am Tripelpunkt vom lod vorherrscht und
b) ein zweiter Teil des lods, der diiodierten aromatischen Verbindung gemäß der allgemeinen Formel II und/oder des Gemischs hieraus bei einem Druck abgetrennt wird, der kleiner als der Druck ist, der am Tripelpunkt vom lod vorherrscht,
wobei in beiden Schritten a) und b) das Stoffgemisch jeweils Temperaturen aufweist, bei denen zumindest lod bei den genannten Drücken gasförmig vorliegt.

2. Verfahren nach Anspruch 1, **dadurch gekennzeichnet, dass** das Stoffgemisch Polyarylensulfide, enthaltend mindestens eine Wiederholungseinheit gemäß der allgemeinen Formel I 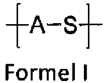 wobei A ein bivalentes aromatisches Radikal darstellt und/oder Prepolymere hiervon enthält.

3. Verfahren nach einem der vorhergehenden Ansprüche, **dadurch gekennzeichnet, dass** die Abtrennung aus einer Polykondensationsreaktion erfolgt, bei der eine Verbindung gemäß Formel II mit einem Sulfidierungsmittel zu einem Polyarylensulfid gemäß der allgemeinen Formel I umgesetzt wird.

4. Verfahren nach vorhergehendem Anspruch, **dadurch gekennzeichnet, dass** die Polykondensation zweistufig durchgeführt wird, wobei
a) in einer ersten Stufe die Verbindung gemäß der allgemeinen Formel II mit einem Sulfidierungsmittel zur Reaktion gebracht und durch Polykondensation ein Prepolymer des Polyarylensulfids der allgemeinen Formel I hergestellt, und
b) in einer zweiten, sich an die erste Stufe anschließenden Stufe eine Polykondensation des Prepolymeren durchgeführt wird,
wobei die Abtrennung aus der ersten Stufe bei Drücken ≥ 126 mbar (abs.) und aus der zweiten Stufe bei Drücken < 126 mbar (abs.) erfolgt.

5. Verfahren nach einem der vorhergehenden Ansprüche, **dadurch gekennzeichnet, dass**
a) der erste abgetrennte Teil einer Destillations- und/oder Kondensationsstufe zugeführt und das lod verflüssigt und
b) der zweite Teil einer Desublimationsstufe zugeführt und das lod desublimiert
wird.

6. Verfahren nach einem der vorhergehenden Ansprüche, **dadurch gekennzeichnet, dass** die Abtrennung des ersten Teils bei
a) Temperaturen des Stoffgemischs von 250 bis 320 °C, bevorzugt von 260 bis 285 °C, und/oder
b) bei Drücken von ≥ 126 bis 1200 mbar (abs.), bevorzugt von ≥ 126 bis 500 mbar (abs.), insbesondere von 130 bis 335 mbar (abs.)
erfolgt.

7. Verfahren nach einem der vorhergehenden Ansprüche, **dadurch gekennzeichnet, dass** die Abtrennung des zweiten Teils bei
a) Temperaturen des Stoffgemischs von 285 bis 320 °C, bevorzugt von 290 bis 300 °C, und/oder
b) bei Drücken von 0,01 bis < 126 mbar (abs.), bevorzugt von 0,1 bis 50 mbar, insbesondere von 0,2 bis 10 mbar (abs.),
erfolgt.

8. Verfahren nach einem der vorhergehenden Ansprüche, **dadurch gekennzeichnet, dass**
a) das bivalente aromatische Radikal A ausgewählt ist aus der Gruppe bestehend aus ortho-, meta- oder para-Phenyl-; Biphenyl-, insbesondere p,p'-Biphenyl-; Diphenylether-, insbesondere p,-p'Diphenylether-; Naphthyl- und/oder Benzophenon-Radikalen, und/oder
b) das Sulfidierungsmittel ausgewählt ist aus der Gruppe bestehend aus Schwefel und/oder Alkalisulfiden.

9. Vorrichtung zur Herstellung von Polyarylensulfiden, enthaltend mindestens eine Wiederholungseinheit gemäß der allgemeinen Formel I 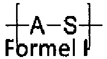
wobei A ein bivalentes aromatisches Radikal darstellt, durch Polykondensation einer diiodierten aromatischen Verbindung gemäß der allgemeinen Formel II
I-A-I Formel II
mit einem Sulfidierungsmittel, umfassend
a) eine Vorkondensationsstufe, umfassend einen Rührkessel (10) oder eine Rührkesselkaskade aus mehreren nacheinander geschalteten Rührkesseln, wobei der Rührkessel (10) bzw. der erste Rührkessel der Rührkesselkaskade mindestens eine Zugabemöglichkeit für die Edukte (11, 12) sowie einen Auslass für das Prepolymere aufweist, sowie dem Rührkessel oder der Rührkesselkaskade nachgeschaltet,
b) eine Polykondensationsstufe, umfassend mindestens einen Polykondensationsreaktor (20) oder eine Kaskade aus mehreren nacheinander geschalteten Polykondensationsreaktoren (20a, 20b), wobei der Polykondensationsreaktor (20) bzw. der erste Polykondensationsreaktor (20a) der Kaskade aus mehreren Polykondensationsreaktoren (20a, 20b) eine Eintragsmöglichkeit für die aus der ersten Stufe erhaltenen Prepolymeren sowie eine Austragsmöglichkeit (22) für das Polykondensat aufweist,
wobei die Vorkondensationsstufe mit der Polykondensationsstufe über eine Produktleitung (13) verbunden ist,
**dadurch gekennzeichnet,**
**dass** der Rührkessel oder mindestens ein Rührkessel der Rührkesselkaskade über mindestens eine Abzugsmöglichkeit (101) für gasförmige Nebenprodukte und/oder nicht abreagierte Edukte, insbesondere lod und/oder die Verbindung der allgemeinen Formel II aufweist, und der Polykondensationsreaktor (20) oder mindestens ein Polykondensationsreaktor (20a, 20b) der Kaskade aus mehreren nacheinander geschalteten Polykondensationsreaktoren (20a, 20b) mindestens eine Abzugsmöglichkeit (201, 201', 201a, 201b) für gasförmige Nebenprodukte und/oder nicht abreagierte Edukte, insbesondere lod und/oder die Verbindung der allgemeinen Formel II aufweist.

10. Vorrichtung nach vorhergehendem Anspruch, **dadurch gekennzeichnet, dass** die mindestens eine Abzugsmöglichkeit (101) in eine Kondensationsvorrichtung und/oder Destillationskolonne (102) zur destillativen Auftrennung der gasförmigen Nebenprodukte und/oder nicht abreagierten Edukte mündet.

11. Vorrichtung nach vorhergehendem Anspruch, **dadurch gekennzeichnet, dass** die Destillationskolonne (102) über eine Rückführung (15) von nicht abreagierten Edukten in den Rührkessel bzw. den ersten Rührkessel der Rührkesselkaskade verfügt.

12. Vorrichtung nach einem der beiden vorhergehenden Ansprüche, **dadurch gekennzeichnet, dass** die Destillationskolonne (102) kopfseitig einen Abzug aufweist, der über eine Zuführung (103) mit mindestens einem Kondensator (104) oder Desublimator verbunden ist.

13. Vorrichtung nach einem der Ansprüche 9 bis 12, **dadurch gekennzeichnet, dass** die mindestens eine Abzugsmöglichkeit (201, 201', 201a, 201b) in mindestens einen Desublimator (202, 202a, 202b) mündet.

14. Vorrichtung nach vorhergehendem Anspruch, **dadurch gekennzeichnet, dass** dem mindestens einen Desublimator (202, 202a, 202b) mindestens eine Destillationskolonne (206) nachgeschaltet ist, die über eine Leitung (205) mit dem mindestens einen Desublimator (202, 202a, 202b) verbunden ist, die einen kopfseitigen Abzug (207) und einen sumpfseitigen Abzug (208) umfasst,

15. Vorrichtung nach vorhergehendem Anspruch, **dadurch gekennzeichnet, dass** der kopfseitige Abzug (208)
a) in den Kondensator (104) oder den Desublimator mündet oder
b) mit dem aus dem Kondensator (104) stammenden Produktstrom (105) vereinigt (209) wird.

16. Vorrichtung nach einem der Ansprüche 9 bis 14, **dadurch gekennzeichnet, dass** eine Vorrichtung zur Erzeugung von Unterdruck (30) umfasst ist, die
a) über mindestens eine Verbindungsleitung (32, 32a, 32b) mit dem mindestens einen Desublimator (202, 202a, 202b) und/oder
b) über mindestens eine Verbindungsleitung (33) mit dem mindestens einen Kondensator (104) oder dem Desublimator verbunden ist.

## Claims

1. A process for separating iodine, at least one diiodinated aromatic compound according to the general formula II
I-A-I Formula II
wherein A represents a divalent aromatic radical and/or mixtures thereof from mixtures of substances containing iodine and/or the at least one diiodinated aromatic compound according to the general formula II
**characterized in that**
a) a first part of the iodine, of the at least one diiodinated aromatic compound according to the general formula II and/or of the mixture thereof is separated at a pressure which is equal to or greater than the pressure prevailing at the triple point of iodine, and
b) a second part of the iodine, the diiodinated aromatic compound according to general formula II and/or the mixture thereof is separated at a pressure which is lower than the pressure prevailing at the triple point of iodine,
wherein in both steps a) and b) the mixture of substances is at temperatures at which at least iodine is present in gaseous form at said pressures.

2. The process according to claim 1, **characterized in that** the mixture of substances comprises polyarylene sulfides containing at least one repeating unit according to the general formula I 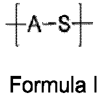 wherein A represents a divalent aromatic radical and/or contains prepolymers thereof.

3. The process according to any one of the preceding claims, **characterized in that** the separation occurs from a polycondensation reaction in which a compound according to formula II is reacted with a sulfidizing agent to form a polyarylene sulfide according to the general formula I.

4. The process according to the preceding claim, **characterized in that** the polycondensation is carried out in two stages, wherein
a) in a first stage, the compound according to the general formula II is reacted with a sulfidizing agent and a prepolymer of the polyarylene sulfide of the general formula I is produced by polycondensation, and
b) in a second stage following the first stage, a polycondensation of the prepolymer is carried out,
wherein the separation from the first stage takes place at pressures ≥ 126 mbar (abs.) and from the second stage at pressures < 126 mbar (abs.).

5. The process according to any one of the preceding claims, **characterized in that**
a) the first separated part is fed to a distillation and/or condensation stage and the iodine is liquefied, and
b) the second part is fed to a desublimation stage and the iodine is desublimated.

6. The process according to one of the preceding claims, **characterized in that** the separation of the first part is carried out at
a) temperatures of the mixture of substances of 250 to 320 °C, preferably of 260 to 285 °C, and/or
b) at pressures of from ≥ 126 to 1200 mbar (abs.), preferably from ≥ 126 to 500 mbar (abs.), in particular from 130 to 335 mbar (abs.).

7. The process according to one of the preceding claims, **characterized in that** the separation of the second part is carried out at
a) temperatures of the mixture of substances of 285 to 320 °C, preferably of 290 to 300 °C, and/or
b) at pressures of from 0.01 to < 126 mbar (abs), preferably from 0.1 to 50 mbar, in particular from 0.2 to 10 mbar (abs.).

8. The process according to any one of the preceding claims, **characterized in that**
a) the divalent aromatic radical A is selected from the group consisting of ortho-, meta- or para-phenyl biphenyl, in particular p,p'-biphenyl; diphenyl ether, in particular p,-p'-diphenyl ether; naphthyl and/or benzophenone radicals, and/or
b) the sulfidizing agent is selected from the group consisting of sulfur and/or alkali metal suifides.

9. An apparatus for the preparation of polyarylene sulfides, comprising at least one repeating unit according to the general formula I 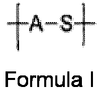
wherein A represents a divalent aromatic radical, by polycondensation of a diiodinated aromatic compound according to the general formula II
I-A-I Formula II
with a sulfidizing agent, comprising
a) a precondensation stage comprising a stirrer vessel (10) or a stirrer vessel cascade of a plurality of stirrer vessels connected in series, the stirrer vessel (10) or the first stirrer vessel of the stirrer vessel cascade having at least one feeding means for the reactants (11, 12) and an outlet for the prepolymer, and downstream of the stirrer vessel or the stirrer vessel cascade,
b) a polycondensation stage comprising at least one polycondensation reactor (20) or a cascade of a plurality of polycondensation reactors (20a, 20b) connected in series, the polycondensation reactor (20) or the first polycondensation reactor (20a) of the cascade of a plurality of polycondensation reactors (20a, 20b) having an inlet possibility for the prepolymers obtained from the first stage and an outlet possibility (22) for the polycondensate,
wherein the pre-condensation stage is connected to the polycondensation stage via a product line (13),
**characterised in that**
the stirrer vessel or at least one stirrer vessel of the stirrer vessel cascade has at least one removal means (101) for gaseous by-products and/or unreacted reactants, in particular iodine and/or the compound of the general formula II, and
the polycondensation reactor (20) or at least one polycondensation reactor (20a, 20b) of the cascade of several polycondensation reactors (20a, 20b) connected in series has at least one removal means (201, 201', 201a, 201b) for gaseous by-products and/or unreacted reactants, in particular iodine and/or the compound of the general formula II.

10. The apparatus according to the preceding claim, **characterised in that** the at least one removal means (101) opens into a condensation device and/or distillation column (102) for separating the gaseous by-products and/or unreacted reactants by distillation.

11. The apparatus according to the preceding claim, **characterized in that** the distillation column (102) has a recirculation (15) of unreacted reactants into the stirrer vessel or the first stirrer vessel of the stirrer vessel cascade.

12. The apparatus according to one of the two preceding claims, **characterised in that** the distillation column (102) has a head-side removal means being connected via a feed (103) to at least one condenser (104) or desublimator.

13. The apparatus according to any one of claims 9 to 12, **characterized in that** the at least one removal means (201, 201', 201a, 201b) opens into at least one desublimator (202, 202a, 202b).

14. The apparatus according to the preceding claim, **characterized in that** at least one distillation column (206) is connected downstream of the at least one desublimator (202, 202a, 202b), which distillation column is connected to the at least one desublimator (202, 202a, 202b) via a line (205) comprising a head-side removal means (207) and a sump-side removal means (208).

15. The apparatus according to the preceding claim, **characterized in that** the head-side removal means (208)
a) opens into the condenser (104) or the desublimator, or
b) is combined (209) with the product stream (105) coming from the condenser (104).

16. The apparatus according to any one of claims 9 to 14, **characterized in that** a device for generating negative pressure (30) is comprised which is
a) connected via at least one connection line (32, 32a, 32b) to the at least one desublimator (202, 202a, 202b) and/or
b) connected to the at least one condenser (104) or the desublimator via at least one connecting line (33).

## Revendications

1. Procédé de séparation de l'iode, à partir d'au moins un composé aromatique diiodé de formule générale II,
I-A-I Formule II
dans laquelle A représente un radical aromatique bivalent, et/ou de mélanges le comportant composés de compositions contenant de l'iode et/ou le composé aromatique diiodé de formule générale II, au moins au nombre de un,
**caractérisé en ce que**
a) une première partie de l'iode du composé aromatique diiodé de formule générale II, moins au nombre de un, et/ou du mélange le comportant, est séparée à une pression supérieure ou égale à la pression qui prévaut au point triple de l'iode et
b) une seconde partie de l'iode du composé aromatique diiodé de formule générale II et/ou du mélange le comportant est séparée à une pression inférieure à la pression qui prévaut au point triple de l'iode,
dans lequel, dans les deux étapes a) et b), la composition présente respectivement des températures auxquelles au moins l'iode se présente sous forme gazeuse aux pressions mentionnées.

2. Procédé selon la revendication 1, **caractérisé en ce que** la composition contient des polysulfures d'arylène, contenant au moins un motif de répétition de formule générale I, 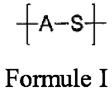 dans laquelle A représente un radical aromatique bivalent, et/ou contient des prépolymères de ceux-ci.

3. Procédé selon l'une quelconque des revendications précédentes, **caractérisé en ce que** la séparation se produit par une réaction de polycondensation, lors de laquelle un composé de formule II est mis à réagir avec un agent de sulfuration pour former un polysulfure d'arylène de formule générale I.

4. Procédé selon la revendication précédente, **caractérisé en ce que** la polycondensation est mise en oeuvre dans deux étages, ou
a) dans un premier étage, le composé de formule générale II est mis à réagir avec un agent de sulfuration et génère par polycondensation un prépolymère de polysulfure d'arylène de formule générale I, et
b) dans un second étage succédant au premier étage, une polycondensation du prépolymère est réalisée,
la séparation dans le premier étage étant réalisée à des pressions ≥ 126 mbar (abs.), et dans le second étage à des pressions < 126 mbar (abs.).

5. Procédé selon l'une quelconque des revendications précédentes, **caractérisé en ce que**
a) la première partie séparée est amenée dans un étage de distillation et/ou de condensation et l'iode est liquéfié, et
b) la seconde partie est amenée dans un étage de désublimation et l'iode est désublimé.

6. Procédé selon l'une des revendications précédentes, **caractérisé en ce que** la séparation de la première partie est réalisée
a) à des températures de la composition comprises entre 250 °C et 320 °C, de préférence comprises entre 260 °C et 285 °C, et/ou
b) à des pressions ≥ 126 mbar et allant jusqu'à 1200 mbar (abs.), de préférence ≥ 126 mbar et allant jusqu'à 500 mbar (abs.), en particulier comprises entre 130 et 335 mbar (abs.).

7. Procédé selon l'une des revendications précédentes, **caractérisé en ce que** la séparation de la seconde partie est réalisée
a) à des températures de la composition comprises entre 285 °C et 320 °C, de préférence comprises entre 290 °C et 300 °C, et/ou
b) à des pressions allant de 0,01 mbar à < 126 mbar (abs.), de préférence comprises entre 0,1 mbar et 50 mbar, en particulier comprises entre 0,2 et 10 mbar (abs.).

8. Procédé selon l'une des revendications précédentes, **caractérisé en ce que**
a) le radical aromatique bivalent A est choisi dans le groupe constitué par des radicaux phényle en position ortho, méta ou para ; des radicaux biphényle, en particulier p,p'-biphényle ; des radicaux diphényléther, en particulier p,p'-diphényléther ; des radicaux naphtyle et/ou benzophénone, et/ou
b) l'agent de sulfuration est choisi dans le groupe constitué par le soufre et/ou les sulfures alcalins.

9. Dispositif permettant de produire des polysulfures d'arylène, contenant au moins un motif de répétition de formule générale I, 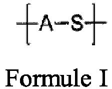
dans laquelle A représente un radical aromatique bivalent, par polycondensation d'un composé aromatique diiodé de formule générale II
I-A-I Formule II
avec un agent de sulfuration, comprenant
a) un étage de précondensation, comprenant une cuve d'agitation (10) ou une cascade de cuves d'agitation composée de plusieurs cuves d'agitation raccordées les unes derrière les autres, la cuve d'agitation (10) ou la première cuve d'agitation de la cascade de cuves d'agitation présentant au moins une possibilité d'ajout d'éduits (11, 12) et une sortie pour le prépolymère, ainsi qu'en aval de la cuve d'agitation ou de la cascade de cuves d'agitation,
b) un étage de polycondensation, comprenant au moins un réacteur de polycondensation (20) ou une cascade de plusieurs réacteurs de polycondensation (20a, 20b) raccordés les uns derrière les autres, le réacteur de polycondensation (20) ou le premier réacteur de polycondensation (20a) de la cascade constituée de plusieurs réacteurs de polycondensation (20a, 20b) présentant une possibilité d'admission des prépolymères obtenus en sortie du premier étage ainsi qu'une possibilité de sortie (22) du polycondensat,
dans lequel l'étage de précondensation est relié à l'étage de polycondensation par l'intermédiaire d'une conduite de produit (13), **caractérisé en ce que**
la cuve d'agitation ou au moins une cuve d'agitation de la cascade de cuves d'agitation présente au moins une possibilité de soutirage (101) de sous-produits gazeux et/ou d'éduits n'ayant pas réagi, en particulier l'iode et/ou le composé de formule générale II, et
le réacteur de polycondensation (20) ou au moins un réacteur de polycondensation (20a, 20b) de la cascade constituée de plusieurs réacteurs de polycondensation (20a, 20b) raccordés les uns derrière les autres présente au moins une possibilité de soutirage (201, 201', 201a, 201b) de sous-produits gazeux et/ou d'éduits n'ayant pas réagi, en particulier l'iode et/ou le composé de formule générale II.

10. Dispositif selon la revendication précédente, **caractérisé en ce que** la possibilité d'évacuation (101), au moins au nombre de une, débouche dans un dispositif de condensation et/ou une colonne de distillation (102) permettant la séparation par distillation des sous-produits gazeux et/ou des éduits n'ayant pas réagi.

11. Dispositif selon la revendication précédente, **caractérisé en ce que** la colonne de distillation (102) est munie d'une conduite de retour (15) des éduits n'ayant pas réagi dans la cuve d'agitation ou dans la première cuve d'agitation de la cascade de cuves d'agitation.

12. Dispositif selon l'une des deux revendications précédentes, **caractérisé en ce que** la colonne de distillation (102) présente côté tête une évacuation qui est reliée à au moins un condenseur (104) ou désublimateur par l'intermédiaire d'une conduite d'amenée (103).

13. Dispositif selon l'une des revendications 9 à 12, **caractérisé en ce que** la possibilité d'évacuation (201, 201', 201a, 201b), au moins au nombre de une, débouche dans au moins un désublimateur (202, 202a, 202b).

14. Dispositif selon la revendication précédente, **caractérisé en ce qu'**est raccordée en aval du désublimateur (202, 202a, 202b), au moins au nombre de un, au moins une colonne de distillation (206) qui est reliée, par l'intermédiaire d'une conduite (205), au désublimateur (202, 202a, 202b), au moins au nombre de un, et qui comprend une évacuation côté tête (207) et une évacuation côté pied de colonne (208).

15. Dispositif selon la revendication précédente, **caractérisé en ce que** l'évacuation côté tête (208)
a) débouche dans le condensateur (104) ou le désublimateur, ou
b) est réunie (209) au flux de produit (105) provenant du condensateur (104).

16. Dispositif selon l'une des revendications 9 à 14, **caractérisé en ce qu'**il comprend un dispositif (30) permettant de générer une dépression, qui
a) est relié, par l'intermédiaire d'au moins une conduite de liaison (32, 32a, 32b), au désublimateur (202, 202a, 202b), au moins au nombre de un, et/ou
b) est relié, par l'intermédiaire d'au moins une conduite de liaison (33), au condensateur (104), au moins au nombre de un, ou au désublimateur.
